# EUROPÄISCHE PATENTSCHRIFT

(11) **EP 2 230 114 B1**
(45) Veröffentlichungstag und Bekanntmachung des Hinweises auf die Patenterteilung: **16.05.2012**
(21) Anmeldenummer: 10155794.0
(22) Anmeldetag: 08.03.2010
(51) Int. Cl.: B60J 1/20, B60J 3/02

(54) **Abdunklungsvorrichtung, die ein zwischen zwei Führungsschienen gleitendes Element verwendet, und Verfahren zur Bestimmung der Krümmungen solcher Schienen**
Darkening device using an element suspended between two guide rails and method for determining the curvature of such rails
Dispositif d'occultation mettant en oeuvre un organe coulissante entre deux rails de guidage et procédé de détermination des courbures de tels rails

(30) Priorität: 09.03.2009 FR 0901069
(43) Veröffentlichungstag der Anmeldung: 22.09.2010
(73) Patentinhaber: Webasto AG, 82131 Stockdorf (DE)
(72) Erfinder: Boinot, Emilien, 85130 LA GAUBRETIERE (FR); Albert, Jean-Paul, 79700 SAINT PIERRE DES ECHAUBROGNES (FR)
(74) Vertreter: Epping - Hermann - Fischer

(56) Entgegenhaltungen:
- DE-A1-102005 013 643
- DE-U1- 20 308 651
- US-A- 5 404 926

## Beschreibung

Die vorliegende Erfindung betrifft eine Vorrichtung, die es ermöglicht, eine oder mehrere lichtdurchlässige Platten zumindest teilweise mittels eines Abdunklungselements abzudunkeln, das zwischen zwei Führungsschienen gleitend montiert ist.

Die Erfindung bezieht sich ebenfalls auf ein Verfahren, das es ermöglicht, die Krümmungen solcher Führungsschienen in dem Fall zu bestimmen, in dem die Abdunklungsvorrichtung dazu bestimmt ist, unter einer konkaven Fläche komplexer Form installiert zu werden.

Die Erfindung findet eine besonders vorteilhafte, aber nicht ausschließliche, Anwendung auf dem Automobilsektor.

Man findet heute immer häufiger Lichtabdunklungen im Inneren von Kraftfahrzeugen. Meist ist diese Art Vorrichtung einer festen Glasplatte, die direkt einen mehr oder weniger großen Bereich des Verdecks bildet, und/oder einem Schiebedachsystem, das eine bewegliche Glasplatte verwendet, und/oder einer Panorama-Windschutzscheibe zugeordnet. Ihre Verwendung ist vor allem dazu bestimmt, die Lichtstärke innerhalb des Fahrzeugs zu steuern, wenn dieses großzügig verglast ist, aber auch dazu, die Treibhauswirkung im Fahrzeuginnenraum an Tagen mit starker Sonneneinstrahlung zu begrenzen.

Um ihre Funktion zu erfüllen, verwenden die aus dem Stand der Technik bekannten Abdunklungsvorrichtungen üblicherweise ein Abdunklungselement, das zwischen zwei parallelen Führungsschienen gleitend montiert ist. Es handelt sich im Allgemeinen entweder um einen Vorhang mit Aufroller, oder um eine einzige Bahn, oder um mehrere lösbar miteinander verbundene Blenden. Traditionell erfolgt das Gleiten des Abdunklungselements zwischen einer ausgebreiteten Stellung, in der es sich vor der abzudunkelnden Zone erstreckt, und einer Aufbewahrungsstellung, in der es in einer Zone angeordnet ist, die sich abseits, aber in direkter Nähe der abzudunkelnden Zone befindet.

In der Praxis ist das Anbringen einer solchen Abdunklungsvorrichtung im Inneren eines Kraftfahrzeugs nicht immer einfach, insbesondere, wenn der Einbau unter einer konkaven Wand stattfinden muss, die eine starke Krümmung in der gleichen Richtung wie diejenige der Führungsschienen aufweist. Dies ist typischerweise der Fall bei einer Windschutzscheiben-Abdunklung, da bei dieser Art Vorrichtung die Aufbewahrungszone des Abdunklungselements sich unter einem vorderen Abschnitt des Verdecks befindet, während die abzudunkelnde Zone aus einem oberen Abschnitt der Windschutzscheibe besteht; wobei die Vereinigung des vorderen Abschnitts des Verdecks und des oberen Abschnitts der Windschutzscheibe eine wie oben definierte konkave Wand bildet. In jedem Fall werden bei einer solchen Konfiguration allgemein in Richtung der Höhe gebogene Führungsschienen verwendet. Ziel ist es, sich der inneren Krümmung der konkaven Wand so gut wie möglich anzupassen, um die Kopffreiheit innerhalb des Fahrzeuginnenraums nicht zu beeinträchtigen.

Es wird aber wesentlich komplizierter, wenn, wie es praktisch immer der Fall ist, die Windschutzscheibe des Fahrzeugs nach unten ausgeweitet ist und folglich schematisch eine Trapezform hat. In einer solchen Situation ist es nämlich so, als ob die Abdunklung der Windschutzscheibe in ein seitlich durch eine senkrechte konvexe Fläche begrenztes Einbauvolumen integriert werden müsste, indem sie sich so gut wie möglich dem Winkel anpasst, der durch die seitliche Fenstersäule der Windschutzscheibe und die obere Säule auf der Seite der Karosserie gebildet wird.

Es gibt hauptsächlich drei Arten, eine Abdunklungsvorrichtung in eine solche Umgebung zu integrieren.

Die erste Lösung besteht darin, Führungsschienen zu verwenden, die in Richtung der Höhe gebogen und parallel zur Achse des Fahrzeugs angeordnet sind. Der Nachteil einer solchen Ausführungsform ist es, überhaupt keine seitliche Abdunklung zu liefern, wodurch der obere Abschnitt der Windschutzscheibe, der sich in direkter Nähe der seitlichen Fenstersäule befindet, völlig unbedeckt gelassen wird.

Die zweite Integrierungsmethode ist ihrerseits dadurch gekennzeichnet, dass gerade Führungsschienen verwendet werden, die aber schräg bezüglich der Achse des Fahrzeugs und idealerweise im Wesentlichen parallel zur seitlichen Fenstersäule der Windschutzscheibe eingebaut werden. Ärgerlich bei dieser Art von Anordnung ist aber, dass sie die Kopffreiheit innerhalb des Fahrzeuginnenraums deutlich verringert.

Die dritte Integrierungsmethode ist schließlich in etwa eine Kombination der beiden ersten. Sie ist nämlich insofern bemerkenswert, als in Richtung der Höhe gebogene Führungsschienen verwendet werden, diese aber bezüglich der Achse schräg und genauer parallel zur seitlichen Fenstersäule der Windschutzscheibe angeordnet sind. Das Problem dieser Konfiguration ist es aber, dass sie die Abdunklung der zentralen Zone des oberen Abschnitts der Windschutzscheibe vernachlässigt.

Aus der DE 102005013643 A1 ist ein Sonnenschutzsystem für ein Kraftfahrzeug bekannt, bei dem die Führungsschienen in Richtung der Höhe als auch in Querrichtung gebogen sind. Es ist ein vorderer Spriegel vorgesehen, welcher z.B. teleskopartig in der Breite veränderlich ist und sich dadurch an einen sich ändernden Abstand der Führungsschienen anpassen kann.

So ist es die vom Gegenstand der vorliegenden Erfindung zu lösende technische Aufgabe, eine ein Abdunklungselement enthaltende Abdunklungsvorrichtung anzubieten, die zwischen zwei Führungsschienen gleitend montiert wird, eine Vorrichtung, die es ermöglicht, die Probleme des Stands der Technik zu vermeiden, indem sie insbesondere eine verstärkte Abdunklungsfähigkeit sowie einen reduzierten Platzbedarf bietet, wenn sie in Höhe einer konkaven Fläche komplexer Form eingebaut werden soll.

Diese Aufgabe wird durch eine Abdunklungsvorrichtung mit den Merkmalen des Anspruch 1 gelöst.

Dies bedeutet in anderen Worten, dass jede Führungsschiene eine Krümmung hat, die sich in die drei Richtungen des Raums erstreckt. Dieses Merkmal erweist sich als besonders vorteilhaft, wenn die Umgebung, die dazu bestimmt ist, die Abdunklungsvorrichtung aufzunehmen, nicht perfekt eben ist.

Dies ist genau der Fall, wenn die Abdunklungsvorrichtung in ein Einbauvolumen integriert werden soll, das insbesondere durch eine obere konkave Fläche, die eine so genannte Längskrümmung in Richtung der Führungsschienen hat, sowie durch eine seitliche konvexe Fläche im Wesentlichen lotrecht zu der oberen konkaven Fläche begrenzt wird. Unter einer solchen Annahme, und gemäß einer Besonderheit der Erfindung, hat jede Führungsschiene eine Krümmung, die im Wesentlichen parallel sowohl zur Längskrümmung der oberen konkaven Fläche als auch zur Krümmung der konvexen Seitenfläche ist.

Selbstverständlich verstehen sich hier die Begriffe einer oberen Positionierung, einer seitlichen Positionierung, einer Konkavität und einer Konvexität bezüglich der Abdunklungsvorrichtung selbst, d.h. unabhängig von der Position dieser letzteren im Raum.

In jedem Fall hat die so definierte Erfindung den Vorteil, perfekt einerseits dazu, in Umgebungen mit konkaven Formen eingebaut zu werden, und andererseits dazu geeignet zu sein, komplexere Flächen als ein einfaches Parallelogramm wirksam abzudunkeln.

Die Tatsache, dass jede Führungsschiene eine Krümmung im Wesentlichen parallel zu derjenigen der oberen konkaven Fläche hat, ermöglicht es, die Abdunklungsvorrichtung so nahe wie möglich an der betreffenden Fläche zu positionieren und somit ihren Platzbedarf in der Höhe zu begrenzen. Dies verleiht dem Abdunklungselement auch eine Verschiebungsfähigkeit gemäß einer krummlinigen Bewegung, die bezüglich der Abdunklungsvorrichtung längs verläuft.

Dagegen ermöglicht die Tatsache, dass jede Führungsschiene außerdem eine Krümmung im Wesentlichen parallel zu derjenigen der konvexen Seitenfläche hat, das Abdunklungs-element gemäß einer krummlinigen Bewegung zu verschieben, die bezüglich der Abdunklungsvorrichtung quer verläuft. Die entsprechende Bahn kann sich dann bestmöglich an die Krümmung der konvexen Seitenfläche anpassen, wodurch die Abdunklungsfähigkeit der Vorrichtung optimiert wird.

Selbstverständlich werden die oben erwähnten krummlinige Längsbewegung und krummlinige Querbewegung kombiniert. So erfolgt schließlich die Verschiebung des Abdunklungselements gemäß einer komplexen krummlinigen Bewegung, die in die drei Richtungen des Raums ausgerichtet ist.

Es sollte betont werden, dass die Erfindung auf jede Art von Abdunklungsvorrichtung anwendbar ist, die ein Abdunklungselement verwendet, das zwischen zwei Führungsschienen gleitend montiert ist, unabhängig von der Beschaffenheit und dem Antriebsmodus des Abdunklungselements. Letzteres kann so wahlweise aus einem Vorhang mit Aufroller, aus einer oder mehreren steifen Blenden, aus mehreren Lamellen, oder aus einem beliebigen gleitenden Element bestehen, das ausreichend undurchsichtig ist. Die Abdunklungsvorrichtung kann ihrerseits manuell betätigbar oder motorisiert sein.

Es ist ebenfalls wichtig zu unterstreichen, dass die Erfindung jeder Art von lichtdurchlässigen Platte zugeordnet werden kann, wie zum Beispiel einer Glasplatte, die direkt einen mehr oder weniger großen Bereich eines Verdecks bildet, einer beweglichen Glasplatte eines Schiebedachsystems, oder einer Panorama-Windschutzscheibe. Außerdem kann die gleiche Abdunklungsvorrichtung selbstverständlich mehreren lichtdurchlässigen Platten zugeordnet werden.

Dabei bezieht sich die Erfindung ebenfalls auf ein Verfahren zur Bestimmung der Krümmungen von zwei Führungsschienen, zwischen denen ein Abdunklungselement einer Abdunklungsvorrichtung gleitend montiert ist, wobei die Abdunklungsvorrichtung dazu bestimmt ist, in ein Einbauvolumen integriert zu werden, das insbesondere durch eine obere konkave Fläche, die eine sogenannte Längskrümmung in Richtung der Führungsschienen hat, sowie durch eine konvexe Seitenfläche im Wesentlichen lotrecht zur oberen konkaven Fläche begrenzt wird.

Dieses Bestimmungsverfahren ist dadurch bemerkenswert, dass es die Schritte aufweist, die darin bestehen:
- eine Kugelkalotte zu definieren, deren Krümmung sich so gut wie möglich der oberen konkaven Fläche anpasst,
- einen Längsabschnitt einer rohrförmigen Fläche zu definieren, deren Querschnitt kreisförmig ist und deren Krümmung sich der konvexen Seitenfläche so gut wie möglich anpasst,
- die Schnittstelle zwischen der Kugelkalotte und der rohrförmigen Fläche zu bestimmen und daraus die Krümmung der der konvexen Seitenfläche am nächsten liegenden Führungsschiene, äußere Führungsschiene genannt, abzuleiten,
- eine kreisförmige Drehfläche zu definieren, indem als Mantellinie die Krümmung der äußeren Führungsschiene und als Radius der Abstand genommen wird, der die zwei Führungsschienen trennen soll,
- die Schnittstelle zwischen der Kugelkalotte und der kreisförmigen Drehfläche zu bestimmen und daraus die Krümmung der am weitesten von der konvexen Seitenfläche entfernten Führungsschiene, innere Führungsschiene genannt, abzuleiten.

Die vorliegende Erfindung betrifft ebenfalls die Merkmale, die im Laufe der nachfolgenden Beschreibung hervortreten, und die einzeln oder gemäß allen ihren möglichen Kombinationen betrachtet werden müssen.

Diese Beschreibung, die als nicht einschränkendes Beispiel dient, ist dazu bestimmt, besser verständlich zu machen, woraus die Erfindung besteht und wie sie durchgeführt werden kann. Sie erfolgt außerdem unter Bezug auf die beiliegenden Zeichnungen, in denen:
Die Figuren 1 bis 3 eine Abdunklungsvorrichtung darstellen, die ins Innere eines Kraftfahrzeuginnenraums integriert ist, um die Abdunklung eines oberen Bereichs der Windschutzscheibe zu gewährleisten.
Figur 1 eine vordere perspektivische Ansicht von außerhalb des Fahrzeugs ist.
Figur 2 ihrerseits eine Längsschnittansicht bildet.
Figur 3 ihrerseits einer Draufsicht senkrecht zur Abdunklungsvorrichtung entspricht.
Die Figuren 4 bis 9 verschiedene Schritte eines Verfahrens veranschaulichen, das es ermöglicht, die Krümmungen der zwei Führungsschienen zu bestimmen, die die Abdunklungsvorrichtung der Figuren 1 bis 3 bestücken.

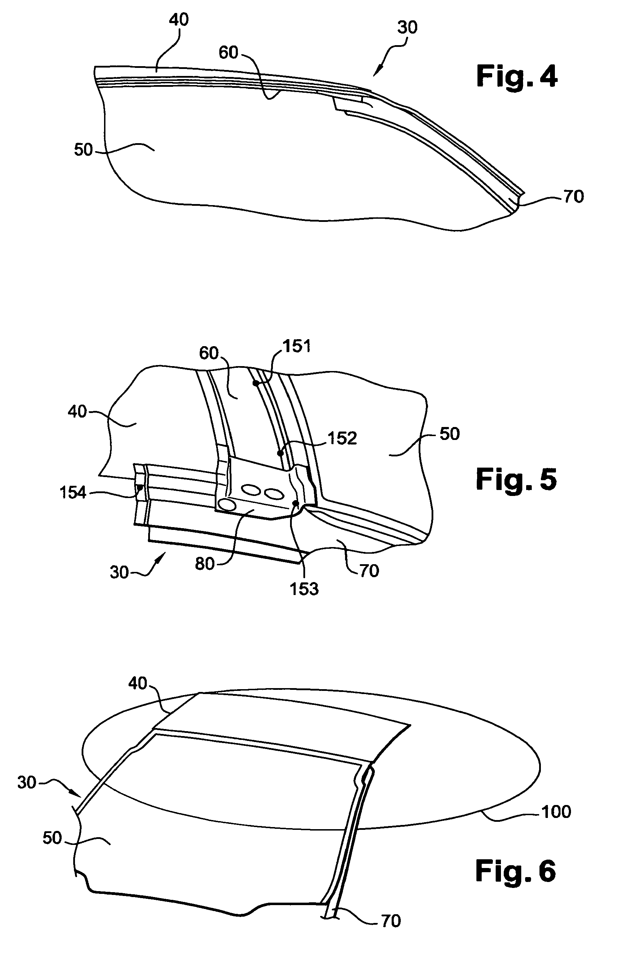

Figur 4 eine vordere perspektivische Ansicht von außerhalb des Fahrzeugs ist, die die Umgebung zeigt, in die die Abdunklungsvorrichtung integriert werden soll, d.h. den Abschnitt des Fahrzeuginnenraums, der sich sowohl unter dem vorderen Bereich des Verdecks als auch unter dem oberen Bereich der Windschutzscheibe befindet.
Figur 5 eine Ansicht analog zu Figur 4, aber in Perspektive von unten ausgehend vom Fahrzeuginnenraum, bildet.
Figur 6 dem ersten Schritt des Verfahrens zur Bestimmung von Krümmungen entspricht, mit einer perspektivischen Ansicht von vorne und von oben, ausgehend vom außerhalb des Fahrzeuginnenraums, der Verbindungszone zwischen dem vorderen Bereich des Verdecks und dem oberen Bereich der Windschutzscheibe.

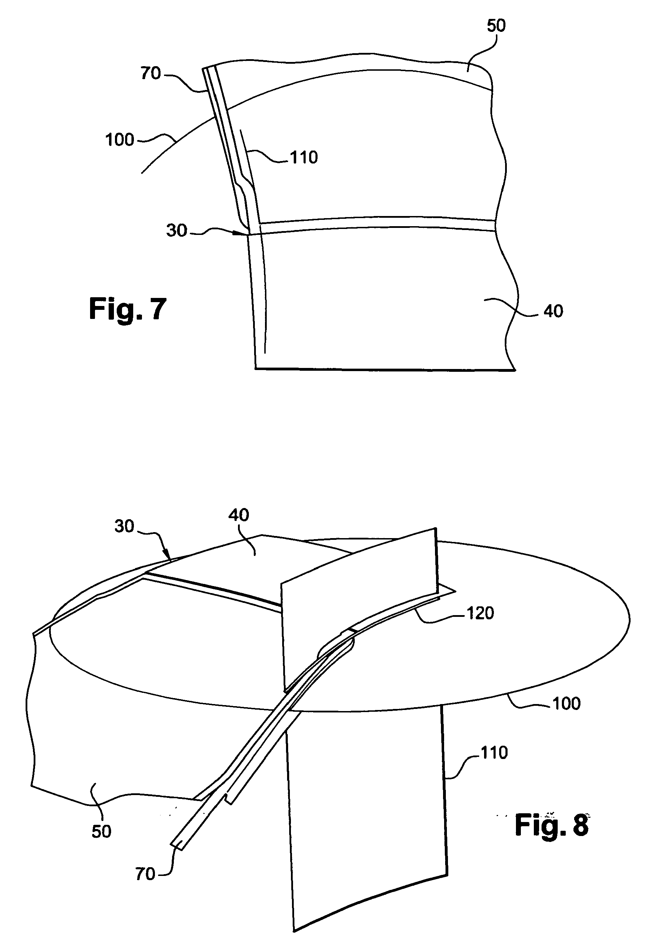

Figur 7 schematisch den zweiten Schritt des Verfahrens zur Bestimmung von Krümmungen zeigt, ausgehend von einer Draufsicht senkrecht zur Verbindungszone zwischen dem Verdeck und der Windschutzscheibe.
Figur 8 eine Ansicht gleich Figur 6 ist, die hier aber einen dritten Schritt des Verfahrens zur Bestimmung von Krümmungen symbolisiert.

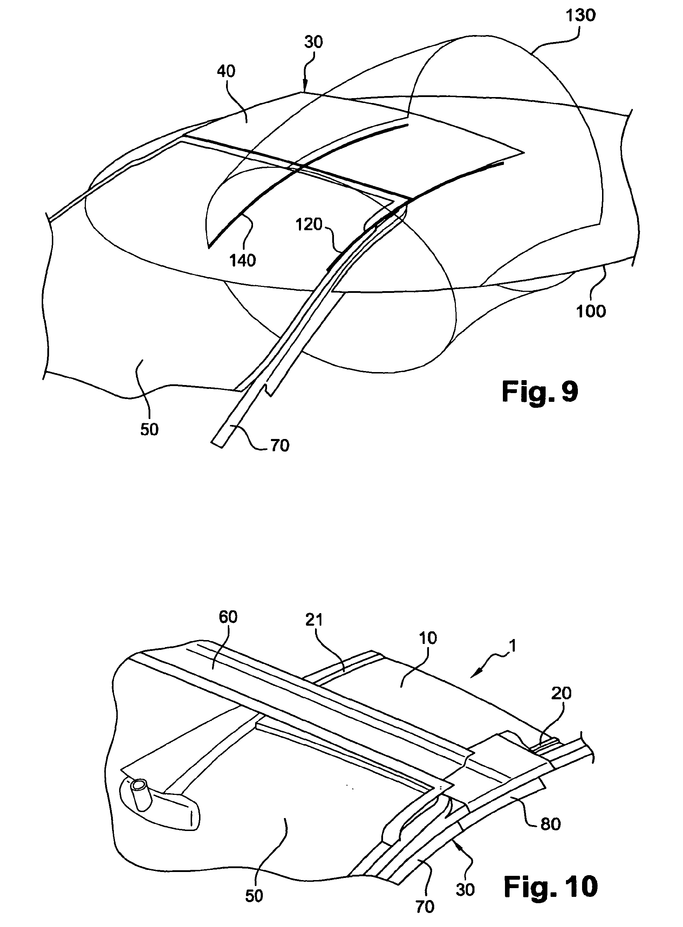

Figur 9 eine Ansicht gleich den Figuren 6 und 8 bildet, die aber dieses Mal für einen vierten und fünften Schritt des Verfahrens zur Bestimmung von Krümmungen repräsentativ ist.

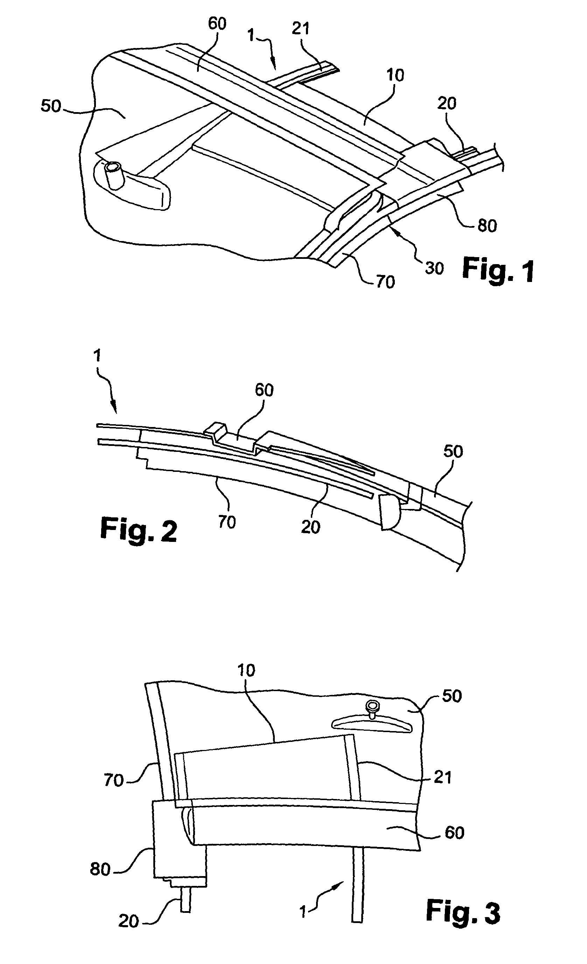

Die Figuren 10 bis 12 die Verschiebungskinematik des Abdunklungselements veranschaulichen, das die Abdunklungsvorrichtung der Figuren 1 bis 3 bestückt.
Figur 10 das Abdunklungselement in der Aufbewahrungsstellung zeigt.

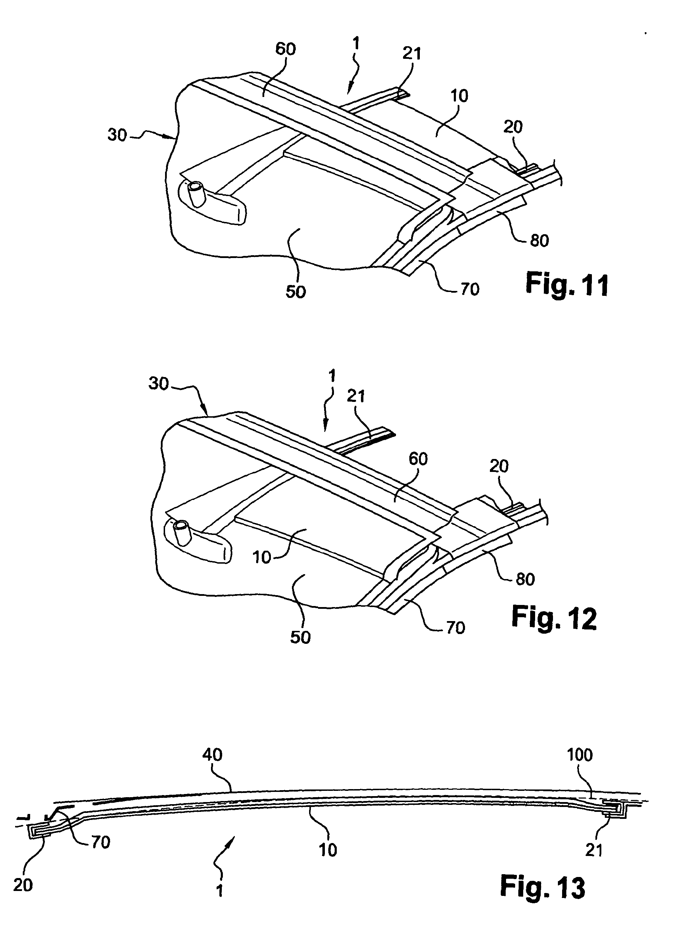

Figur 11 das Abdunklungselement während des Gleitens zeigt.
Figur 12 das Abdunklungselement in der ausgebreiteten Stellung darstellt.
Figur 13 ein Querschnitt durch das Abdunklungselement ist.

Aus Gründen der Klarheit wurden gleiche Elemente mit gleichen Bezugszeichen versehen. Auch wurden nur die für das Verständnis der Erfindung wichtigen Elemente dargestellt, und dies ohne Beachtung des Maßstabs und schematisch.

Die Figuren 1 bis 3 veranschaulichen eine Abdunklungsvorrichtung 1, die ins Innere des Innenraums eines Kraftfahrzeugs 30 integriert ist. In dieser besonderen Ausführungsform, die nur als Beispiel gewählt wurde, handelt es sich genauer um eine Abdunklung einer Windschutzscheibe. Die Abdunklungsvorrichtung 1 wird nämlich zu beiden Seiten überlappend unter einem vorderen Abschnitt des Verdecks 40 und unter einem oberen Abschnitt der Windschutzscheibe 50 eingebaut. Wie man insbesondere in Figur 3 sehen kann, ist die Windschutzscheibe 50 nach unten ausgeweitet, was ihr eine im Wesentlichen trapezförmige allgemeine Form verleiht.

Um ihre Funktion zu erfüllen, verwendet die Abdunklungsvorrichtung 1 in klassischer Weise ein Abdunklungselement 10, das zwischen zwei Führungsschienen 20, 21 gleitend montiert ist. Diese Beweglichkeit wird zwischen einer ausgebreiteten Stellung, in der das Abdunklungselement 10 sich gegenüber der abzudunkelnden Zone erstreckt, und einer Aufbewahrungsstellung ausgeübt, in der das Abdunklungs-element 10 in einer Zone angeordnet ist, die sich abseits, aber in direkter Nähe der abzudunkelnden Zone befindet. In dieser Logik besteht die abzudunkelnde Zone aus einem oberen Abschnitt der Windschutzscheibe 50, während die Aufbewahrungszone des Abdunklungselements sich unter einem vorderen Abschnitt des Verdecks 40 befindet.

Gemäß dem Gegenstand der vorliegenden Erfindung ist jede Führungsschiene 20, 21 sowohl in Richtung der Höhe (Figur 2) als auch in Richtung der Breite (Figur 3) gebogen. Unter Berücksichtigung der Einbaustellung der Abdunklungsvorrichtung 1, die allgemein im Wesentlichen waagrecht und parallel zur Achse des Fahrzeugs 30 ist, bedeutet dies, dass die zwei Führungsschienen 20, 21 im vorliegenden Fall sowohl in einer senkrechten Ebene (Figur 2) als auch in einer Querebene (Figur 3) gewölbt sind.

In diesem Ausführungsbeispiel ist es eine Tatsache, dass die Abdunklungsvorrichtung 1 in ein Einbauvolumen integriert ist, dessen Form nicht parallelepipedisch ist. Wie man in Figur 2 sehen kann, formt die Vereinigung des vorderen Abschnitts des Verdecks 40 und des oberen Abschnitts der Windschutzscheibe 50 eine konkave Fläche, die eine starke Krümmung in der gleichen Richtung wie diejenige der Führungsschienen 20, 21 hat, Längskrümmung genannt. Wie aber Figur 3 zeigt, ist das Einbauvolumen außerdem seitlich durch eine konvexe Seitenfläche begrenzt, die sich im Wesentlichen lotrecht zur oberen konkaven Fläche erstreckt. Unter diesen Bedingungen, und gemäß einer Besonderheit der Erfindung, hat jede Führungsschiene 20, 21 eine Krümmung, die im Wesentlichen sowohl zur Längskrümmung der oberen konkaven Fläche als auch zur Krümmung der konvexen Seitenfläche parallel ist.

Gemäß einer anderen Besonderheit der Erfindung liegen die Krümmungen der zwei Führungsschienen 20, 21 auf der gleichen Kugelfläche. Das bedeutet in anderen Worten, dass die zwei Führungsschienen nicht strikt identisch sind, sondern dass ihre jeweiligen Krümmungen voneinander abhängen. In jedem Fall garantiert dieses Merkmal ein einwandfreies Gleiten des Abdunklungselements 10 entlang der Führungsschienen 20, 21.

In besonders vorteilhafter Weise hat das Abdunklungselement 10 einem konkaven Querschnitt (Figur 13). Es versteht sich hier, dass die Konkavität des Abdunklungselements 10 nicht unbedingt gleich derjenigen der oberen Fläche ist, und dass sie insbesondere stärker sein kann, um die Kopffreiheit im Inneren des Innenraums des Kraftfahrzeugs 30 noch stärker zu optimieren.

Gemäß einem weiteren vorteilhaften Merkmal der Erfindung besteht das Abdunklungselement 10 aus einer im Wesentlichen steifen Platte. In diesem Ausführungsbeispiel sind die Seitenränder dieser Platte 10 so ausgebildet, dass sie direkt entlang der Führungsschienen gleiten können (Figur 13). Es versteht sich aber, dass die Platte 10 in gleicher Weise mit Gleitschuhen, und insbesondere mit vier Gleitschuhen ausgestattet sein könnte, die an den vier Ecken der Platte 10 eingebaut sind.

Selbstverständlich betrifft die Erfindung allgemeiner jedes Kraftfahrzeug, das mit mindestens einer wie oben beschriebenen Abdunklungsvorrichtung 1 versehen ist.

Die Form der Führungsschienen 20, 21 ist keineswegs zufällig. Ihre jeweiligen Krümmungen werden nämlich präzise mittels eines Verfahrens bestimmt, dessen wichtigste Schritte in den Figuren 4 bis 9 veranschaulicht sind.

Viele Parameter dieses Verfahrens zur Bestimmung von Krümmungen berücksichtigen direkt die Umgebung, in die die Abdunklungsvorrichtung 1 integriert werden soll, und insbesondere das Einbauvolumen, das in Höhe der Verbindungszone zwischen dem vorderen Bereich des Verdecks 40 und dem oberen Bereich der Windschutzscheibe 50 zur Verfügung steht.

Die Figuren 4 und 5 zeigen, dass das Einbauvolumen von den jeweiligen Formen und der relativen Stellung der Windschutzscheibe 50 bezüglich des Verdecks 40 sowie vom Vorhandensein von Bauelementen der Karosseriestruktur des Fahrzeugs 30 abhängt. Hier wird insbesondere an den oberen Fensterquerträger 60, auf dem der vordere Rand des Verdecks 40 und der obere Rand der Windschutzscheibe 50 ruhen, aber auch an die Fenstersäulenverkleidung 70 gedacht, die mit dem oberen Fensterquerträger 60 über die Eckversteifung 80 verbunden ist.

In jedem Fall ist es klar, dass die Vereinigung des vorderen Abschnitts des Verdecks 40 und des oberen Abschnitts der Windschutzscheibe 50 eine konkave Fläche im Sinne der Erfindung bildet. Man stellt aber ebenfalls fest, dass die ausgeweitete Form der Windschutzscheibe 50 eine schräge Positionierung der Fenstersäulenverkleidung 70 bezüglich der Sagittalebene des Fahrzeugs 30 bedingt, was darauf hinausläuft zu sagen, dass, wenn es eine senkrechte Fläche ist, die seitlich das Einbauvolumen begrenzt, diese notwendigerweise konvex im Sinne der Erfindung ist. Daher wird schließlich angenommen, dass in diesem Ausführungsbeispiel das Einbauvolumen insbesondere von einer konkaven oberen Fläche und von einer konvexen, im Wesentlichen lotrechten Seitenfläche begrenzt wird.

Gemäß Figur 6 besteht der erste Schritt des Verfahrens zur Bestimmung von Krümmungen darin, eine Kugelkalotte 100 zu definieren, deren Krümmung sich bestmöglich an die konkave obere Fläche anpasst.

Es ist hier wichtig anzumerken, dass diese Berührung sowohl in Längs- als auch in Querrichtung erfüllt sein muss. Das bedeutet konkret, dass die Krümmung der Kugelkalotte 100 sowohl in Abhängigkeit vom Längsprofil der oberen konkaven Fläche, das sich schematisch aus der Nebeneinanderanordnung des vorderen Abschnitts des Verdecks 40 und des oberen Abschnitts der Windschutzscheibe 50 ergibt, als auch in Abhängigkeit vom Querschnitt der oberen konkaven Fläche definiert werden muss, deren Form hauptsächlich von der Positionierung der Fenstersäulenverkleidung 70 bezüglich des Verdecks 40 abhängt (Figur 13).

Wie man in Figur 7 sehen kann, besteht der zweite Schritt des Verfahrens seinerseits darin, einen Längsabschnitt einer rohrförmigen Fläche 110 zu definieren, deren Querschnitt kreisförmig ist und deren Krümmung sich bestmöglich an die konvexe Seitenfläche anpasst.

Da Figur 7 eine Ansicht senkrecht zum Einbauvolumen ist, und da die konvexe Seitenfläche per Definition im Wesentlichen lotrecht zur oberen konkaven Fläche ist, erscheint die rohrförmige Fläche 110 hier in Form eines einfachen Kreisabschnitts. Man sieht aber wohl, dass dieser Kreisabschnitt sich der Ausweitung der Windschutzscheibe 50 maximal annähert, d.h. dass er so nahe wie möglich dem Winkel folgt, der von der Fenstersäulenverkleidung 70 und dem Seitenrand des Verdecks 40 gebildet wird.

Der dritte Schritt des Verfahrens, Gegenstand der Figur 8, läuft seinerseits darauf hinaus, die Schnittstelle zwischen der Kugelkalotte 100 und der rohrförmigen Fläche 110 zu bestimmen und daraus die Krümmung 120 der Führungsschiene abzuleiten, die der konvexen Seitenfläche, d.h. der äußeren Führungsschiene 20, am nächsten liegt.

Figur 9 veranschaulicht sowohl den vierten als auch den fünften Schritt.

Der vierte Schritt besteht darin, eine kreisförmige Drehfläche 130 zu definieren, indem als Mantellinie die Krümmung 120 der äußeren Führungsschiene 20 und als Radius der Abstand genommen wird, der die zwei Führungsschienen 20, 21 trennen soll.

Der fünfte Schritt läuft seinerseits darauf hinaus, die Schnittstelle zwischen der Kugelkalotte 100 und der kreisförmigen Drehfläche 130 zu bestimmen und daraus die Krümmung 140 der von der konvexen Seitenfläche am weitesten entfernten Führungsschiene, d.h. der inneren Führungsschiene 21, abzuleiten.

Gemäß einer Besonderheit dieses Bestimmungsverfahrens wird die Kugelkalotte 100 ausgehend von vier Punkten 151, 152, 153, 154 der oberen konkaven Fläche bestimmt, die nicht koplanar und in Höhe von Zonen des Einbauvolumens verteilt sind, wo die Zwänge des Platzbedarfs am größten sind.

In diesem Ausführungsbeispiel, und wie man in Figur 5 sehen kann, wurde ein erster Punkt 151 mitten auf dem oberen Fensterquerträger 60 gewählt, d.h. da, wo die Sagittalebene des Fahrzeugs 30 verläuft. Man findet ebenfalls einen zweiten Punkt 152 auf diesem oberen Fensterquerträger 60, aber er ist außermittiger positioniert, da er sich im Wesentlichen im rechten Winkel zum Kopf des Fahrers des Fahrzeugs 30 befindet. Ein dritter Punkt 153 wurde in Höhe der Eckversteifung 80 gewählt, und er ist dadurch bemerkenswert, dass er mit den beiden ersten fluchtend ausgerichtet ist. Der vierte und letzte Punkt 153 befindet sich seinerseits deutlich weiter hinten als seine Gegenstücke angeordnet, am Ende der Fenstersäulenverkleidung 70.

Die Verschiebungskinematik des Abdunklungselements 10 ist in den Figuren 10 bis 12 veranschaulicht. Aufgrund der Biegung der zwei Führungsschienen, sowohl in Richtung der Höhe als auch in Querrichtung, erfolgt das Gleiten der Platte 10 gemäß einer krummlinigen Bewegung, die in den drei Dimensionen des Raums ausgerichtet ist. Die Abdunklungsvorrichtung 1 verfügt über mehrere Betriebsstellungen, da die Platte 10 zwischen der Aufbewahrungsstellung der Figur 10 und der ausgebreiteten Stellung der Figur 12 frei gleitend montiert ist, aber sie kann in einer Vielzahl von Zwischenstellungen gemäß Figur 11 arretiert werden.

## Patentansprüche

1. Abdunklungsvorrichtung (1) mit einem Abdunklungselement (10), das zwischen zwei Führungsschienen (20, 21) gleitend montiert ist, wobei jede Führungsschiene (20, 21) bezogen auf eine im Wesentlichen waagrechten Einbaustellung der Abdunklungsvorrichtung sowohl in Richtung der Höhe nach unten als auch in Querrichtung gebogen ist,
**dadurch gekennzeichnet, dass** die Krümmungen der Führungsschienen (20, 21) parallel zueinander sind.

2. Abdunklungsvorrichtung nach Anspruch 1,
**dadurch gekennzeichnet, dass** der Abstand der beiden Führungsschienen im Verschiebebereich gleich ist.

3. Abdunklungsvorrichtung (1) nach Anspruch 1 oder 2,**dadurch gekennzeichnet, dass**, da die Abdunklungsvorrichtung (1) dazu bestimmt ist, in ein Einbauvolumen integriert zu werden, das insbesondere durch eine obere konkave Fläche, die eine sogenannte Längskrümmung in Richtung der Führungsschienen (20, 21) hat, sowie durch eine konvexe Seitenfläche im Wesentlichen lotrecht zur oberen konkaven Fläche begrenzt wird, jede Führungsschiene (20, 21) eine Krümmung hat, die im Wesentlichen parallel zur Längskrümmung der oberen konkaven Fläche und zur Krümmung der konvexen Seitenfläche ist.

4. Abdunklungsvorrichtung (1) nach einem der Ansprüche 1 bis 3, **dadurch gekennzeichnet, dass** die Krümmungen der zwei Führungsschienen (20, 21) auf der gleichen Kugelfläche liegen.

5. Abdunklungsvorrichtung (1) nach einem der Ansprüche 1 bis 4, **dadurch gekennzeichnet, dass** das Abdunklungs-element (10) eine konkave Form hat.

6. Abdunklungsvorrichtung (1) nach einem der Ansprüche 1 bis 5, **dadurch gekennzeichnet, dass** das Abdunklungs-element (10) aus einer im Wesentlichen steifen Platte besteht.

7. Kraftfahrzeug (30), **dadurch gekennzeichnet, dass** es mindestens eine Abdunklungsvorrichtung (1) nach einem der vorhergehenden Ansprüche aufweist.

8. Verfahren zur Bestimmung der Krümmungen von zwei Führungsschienen (20, 21), zwischen denen ein Abdunklungs-element (10) einer Abdunklungsvorrichtung (1) gleitend montiert ist, wobei die Abdunklungsvorrichtung (1) dazu bestimmt ist, in ein Einbauvolumen integriert zu werden, das insbesondere durch eine obere konkave Fläche, die eine sogenannte Längskrümmung in Richtung der Führungsschienen (20, 21) hat, sowie durch eine konvexe Seitenfläche im Wesentlichen lotrecht zur oberen konkaven Fläche begrenzt wird, **dadurch gekennzeichnet, dass** es die Schritte aufweist, die darin bestehen:
- eine Kugelkalotte (100) zu definieren, deren Krümmung sich so gut wie möglich der oberen konkaven Fläche anpasst,
- einen Längsabschnitt einer rohrförmigen Fläche (110) zu definieren, deren Querschnitt kreisförmig ist und deren Krümmung sich der konvexen Seitenfläche so gut wie möglich anpasst,
- die Schnittstelle zwischen der Kugelkalotte (100) und der rohrförmigen Fläche (110) zu bestimmen und daraus die Krümmung (120) der der konvexen Seitenfläche am nächsten liegenden Führungsschiene, äußere Führungsschiene (20) genannt, abzuleiten,
- eine kreisförmige Drehfläche (130) zu definieren, indem als Mantellinie die Krümmung (120) der äußeren Führungsschiene (20) und als Radius der Abstand genommen wird, der die zwei Führungsschienen (20, 21) trennen soll,
- die Schnittstelle zwischen der Kugelkalotte (100) und der kreisförmigen Drehfläche (130) zu bestimmen und daraus die Krümmung (140) der am weitesten von der konvexen Seitenfläche entfernten Führungsschiene, innere Führungsschiene (21) genannt, abzuleiten.

9. Bestimmungsverfahren nach Anspruch 8, **dadurch gekennzeichnet, dass** die Kugelkalotte (100) ausgehend von vier Punkten (151, 152, 153, 154) der oberen konkaven Fläche definiert wird, die nicht koplanar und in Höhe von Zonen des Einbauvolumens verteilt sind, wo die Platzbedarfzwänge am größten sind.

## Claims

1. Darkening device (1) with a darkening element (10) which is fitted in a sliding manner between two guide rails (20, 21), wherein each guide rail (20, 21) is curved both vertically downwards and in the transverse direction with respect to a substantially horizontal installation position of the darkening device, **characterized in that** the curvatures of the guide rails (20, 21) are parallel to each other.

2. Darkening device according to Claim 1, **characterized in that** the distance between the two guide rails in the displacement region is the same.

3. Darkening device (1) according to Claim 1 or 2, **characterized in that** since the darkening device (1) is intended to be integrated into an installation volume which is bounded in particular by an upper concave surface, which has a "longitudinal curvature" in the direction of the guide rails (20, 21), and by a convex side surface substantially perpendicular to the upper concave surface, each guide rail (20, 21) has a curvature which is substantially parallel to the longitudinal curvature of the upper concave surface and to the curvature of the convex side surface.

4. Darkening device (1) according to one of Claims 1 to 3, **characterized in that** the curvatures of the two guide rails (20, 21) lie on the same spherical surface.

5. Darkening device (1) according to one of Claims 1 to 4, **characterized in that** the darkening element (10) has a concave shape.

6. Darkening device (1) according to one of Claims 1 to 5, **characterized in that** the darkening element (10) consists of a substantially rigid plate.

7. Motor vehicle (30), **characterized in that** it has at least one darkening device (1) according to one of the preceding claims.

8. Method for determining the curvatures of two guide rails (20, 21) between which a darkening element (10) of a darkening device (1) is fitted in a sliding manner, wherein the darkening device (1) is intended to be integrated into an installation volume which is bounded in particular by an upper concave surface, which has a "longitudinal curvature" in the direction of the guide rails (20, 21), and by a convex side surface substantially perpendicular to the upper concave surface, **characterized in that** the method has the steps which consist in:
- defining a spherical cap (100), the curvature of which is matched as well as possible to the upper concave surface,
- defining a longitudinal section of a tubular surface (110), the cross section of which is circular and the curvature of which is matched as well as possible to the convex side surface,
- determining the intersecting point between the spherical cap (100) and the tubular surface (110) and deriving therefrom the curvature (100) of the guide rail located closest to the convex side surface, referred to as the outer guide rail (20),
- defining a circular rotational surface (130) by the curvature (120) of the outer guide rail (20) being taken as the circumferential line and the distance which is intended to separate the two guide rails (20, 21) being taken as the radius,
- determining the intersecting point between the spherical cap (100) and the circular rotational surface (130) and deriving therefrom the curvature (140) of the guide rail which is furthest away from the convex side surface, referred to as the inner guide rail (21).

9. Determining method according to Claim 8, **characterized in that** the spherical cap (100) is defined on the basis of four points (151, 152, 153, 154) of the upper concave surface, which points are not coplanar and are distributed at the height of zones of the installation volume where there are the greatest space requirement constraints.

## Revendications

1. Dispositif d'occultation (1) comprenant un organe occulteur (10) monté coulissant entre deux rails de guidage (20, 21), chaque rail de guidage (20, 21) étant cintré à la fois dans le sens de la hauteur vers le bas et dans le sens transversal, par rapport à une position d'installation sensiblement horizontale du dispositif d'occultation, **caractérisé en ce que** les courbures des rails de guidage (20, 21) sont parallèles les unes aux autres.

2. Dispositif d'occultation selon la revendication 1, **caractérisé en ce que** la distance entre les deux rails de guidage dans la région de déplacement est identique.

3. Dispositif d'occultation (1) selon la revendication 1 ou 2, **caractérisé en ce que** ledit dispositif d'occultation (1) étant destiné à être intégré dans un volume d'implantation qui est délimité notamment par une surface supérieure concave présentant une courbure dite longitudinale suivant la direction des rails de guidage (20, 21), ainsi que par une surface latérale convexe sensiblement orthogonale à ladite surface supérieure concave, chaque rail de guidage (20, 21) présente une courbure qui est sensiblement parallèle à la fois à la courbure longitudinale de la surface supérieure concave, et à la courbure de la surface latérale convexe.

4. Dispositif d'occultation (1) selon l'une quelconque des revendications 1 à 3, **caractérisé en ce que** les courbures des deux rails de guidage (20, 21) s'inscrivent sur une même surface sphérique.

5. Dispositif d'occultation (1) selon l'une quelconque des revendications 1 à 4, **caractérisé en ce que** l'organe occulteur (10) présente une forme concave.

6. Dispositif d'occultation (1) selon l'une quelconque des revendications 1 à 5, **caractérisé en ce que** l'organe occulteur (10) est constitué par un panneau sensiblement rigide.

7. Véhicule automobile (30), **caractérisé en ce qu'**il comporte au moins un dispositif d'occultation (1) selon l'une quelconque des revendications précédentes.

8. Procédé de détermination des courbures de deux rails de guidage (20, 21) entre lesquels est monté coulissant un organe occulteur (10) d'un dispositif d'occultation (1), ledit dispositif d'occultation (1) étant destiné à être intégré dans un volume d'implantation qui est délimité notamment par une surface supérieure concave présentant une courbure dite longitudinale suivant la direction des rails de guidage (20, 21), ainsi que par une surface latérale convexe sensiblement orthogonale à ladite surface supérieure concave, **caractérisé en ce qu'**il comporte les étapes consistant à:
- définir une calotte sphérique (100) dont la courbure épouse au mieux la surface supérieure concave,
- définir une portion longitudinale de surface tubulaire (110) dont la section est circulaire, et dont la courbure épouse au mieux la surface latérale convexe,
- déterminer l'intersection entre la calotte sphérique (100) et la surface tubulaire (110), et en déduire la courbure (120) du rail de guidage le plus proche de la surface latérale convexe, dit rail de guidage extérieur (20),
- définir une surface de révolution circulaire (130) en prenant comme génératrice la courbure (120) du rail de guidage extérieur (20), et comme rayon l'écartement devant séparer les deux rails de guidage (20, 21),
- déterminer l'intersection entre la calotte sphérique (100) et la surface de révolution circulaire (130), et en déduire la courbure (140) du rail de guidage le plus éloigné de la surface latérale convexe, dit rail de guidage intérieur (21).

9. Procédé de détermination selon la revendication 8, **caractérisé en ce que** la calotte sphérique (100) est définie à partir de quatre points (151, 152, 153, 154) de la surface supérieure concave, qui sont non coplanaires et qui sont répartis au niveau de zones du volume d'implantation où les contraintes d'encombrement sont les plus importantes.
